# EUROPEAN PATENT APPLICATION

(11) **EP 0 831 260 A2**
(43) Date of publication of application: **25.03.1998**
(21) Application number: 97660097.3
(22) Date of filing: 12.09.1997
(51) Int. Cl.: F16K 11/074

(54) **Mixing valve with temperature control**

(30) Priority: 18.09.1996 FI 963695
(71) Applicant: ORAS OY, 26101 Rauma (FI)
(72) Inventor: Jäpölä, Jari, 27170 Kuivalahti (FI); Rautavuori, Janne, 26100 Rauma (FI)
(74) Representative: Nordin, Leif

(57) **Abstract**

The object of the invention is a single-control mixing valve with temperature control. The valve has two operating states, a normal operating state and a manual operating state. In the normal state, an adjusting knob is used to select the temperature and the opened/closed position is controlled by a solenoid valve. In the manual operating state, the solenoid valve is by-passed. The valve solution according to the invention can be applied, for example, to photocell-controlled wash basin faucets.

## Description

The object of the invention is a single-control mixing valve with temperature control according to the introduction of Claim 1. The valve solution according to the invention can be applied, for example, to implementing photocell-controlled faucets of wash basins.

Single-control mixing valves are well-known and common in the plumbing field. These valves produce a mixed flow of water from separate flows of hot and cold water. However, the single-control faucets are difficult to use because the user has to turn the faucet and find a suitable temperature position and he or she must often also wait a while before a convenient water temperature is reached.

There are various valves which are operated automatically by photocells, for example. Such automatic valves are opened by a user when he or she comes into the vicinity of the valve, for example, to the response area of the photocell. The automatic faucet can be implemented, for example, by a solenoid valve which opens and closes the faucet according to the control of the photocell and the electronics.

A problem with the implementation of automatic faucets is often that the photocell which controls the valve makes the faucet work in inconvenient situations, such as during cleaning up. Correspondingly, an interruption in distribution of electricity brings the functioning of the automatic faucet to a full stop.

The purpose of the present invention is to provide a solution to implement a single-control temperature-adjustable mixing valve which can be used to solve the above-mentioned problems and to correct the deficiencies. To accomplish this, the solution according to the invention is characterised in that a solenoid valve is adapted to be by-passed so that at least a limited flow-through is provided manually.

The valve has two service states, a normal state and a manual service state. In its normal service position, the faucet is opened and closed by the solenoid valve which is controlled by a photocell and electronics. In this service position, the user can adjust the water temperature by using a control knob. The control range extends from completely cold to completely hot.

However, for completely cold and completely hot water, the user can get either cold or hot water by a low flow rate by turning the same control knob. The temperature is adjusted by ceramic plates; therefore, there is no clearance leakage in the temperature control and it is possible to obtain completely cold water.

In the following, the invention is described in detail with reference to the appended drawings in which:
Fig. 1 is a cross-section of the mixing valve solution according to the invention,
Fig. 2 shows the structure of the upper ceramic regulating stone of the mixing valve solution according to the invention,
Fig. 3 shows the structure of the lower ceramic regulating stone of the mixing valve solution according to the invention,
Fig. 4 shows the mutual positions of the upper and lower ceramic regulating stones of the mixing valve solution according to the invention when the faucet is closed,
Fig. 5 shows the mutual positions of the upper and lower ceramic regulating stones of the mixing valve solution according to the invention when the faucet is in the position of cold water and low flow rate,
Fig. 6 shows the mutual positions of the upper and lower ceramic regulating stones of the mixing valve solution according to the invention when the faucet is in the position of the normal flow rate of cold water,
Fig. 7 shows the mutual positions of the upper and lower ceramic regulating stones of the mixing valve solution according to the invention when the faucet is in the position of mixed water,
Fig. 8 shows the mutual positions of the upper and lower ceramic regulating stones of the mixing valve solution according to the invention when the faucet is in the position of the normal flow rate of hot water,
Fig. 9 shows the mutual positions of the upper and lower ceramic regulating stones of the mixing valve solution according to the invention when the faucet is in the position of hot water and low flow rate,
Fig. 10 shows the mutual positions of the upper and lower ceramic regulating stones of the mixing valve solution according to the invention when the faucet is in the manual service state position.

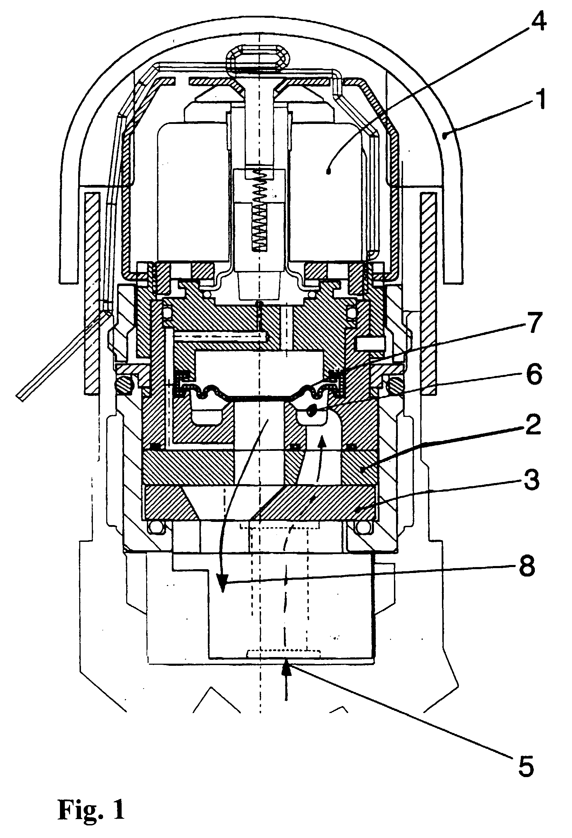

The solution according to the invention is described in the following with reference to Figs. 1 to 10 which illustrate the implementation of the solution according to the invention.

Fig. 1 is the cross-section of the mixing valve solution according to the invention. The mixing valve according to the invention comprises knob 1, upper regulating stone 2, lower regulating stone 3, magnetic winding 4, and diaphragm 7. In addition, the inlet passage of water is marked number 5, mixing space of water 6, and outlet passage of water number 8 in the figure.

When knob 1 is turned, upper regulating stone 2 also moves, correspondingly. Lower regulating stone 3 always remains in place. The mutual positions of regulating stones 2, 3 influence the entry of water to mixing space 6 of water. Magnetic winding 4 of the valve opens or closes the passage of water passing diaphragm 7, opening or closing the valve.

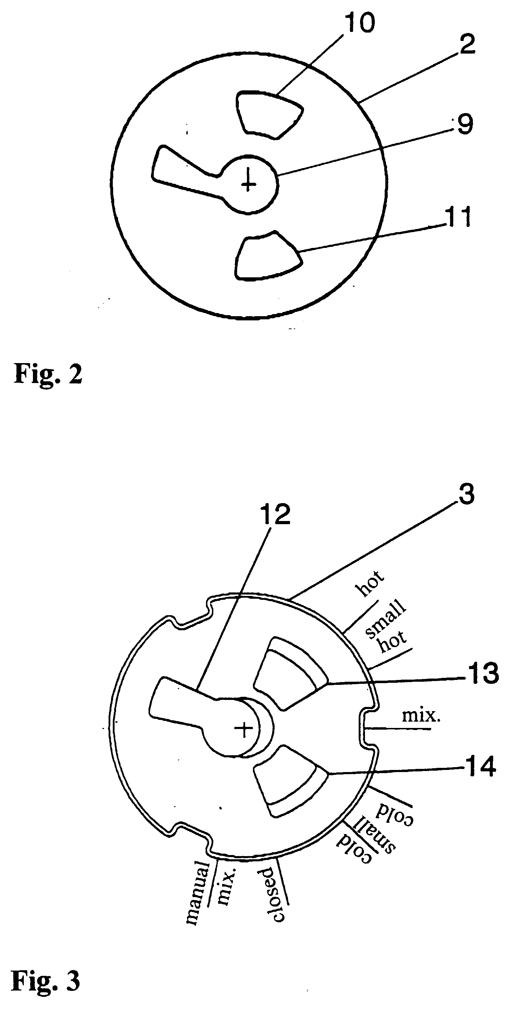

Fig. 2 shows the structure of the upper ceramic regulating stone of the mixing valve solution. Upper regulating stone 2 comprises ports 9, 10, 11 so that when knob 1 is turned, the positions of ports 9-11 are turned, at the same time, with respect to the ports of lower regulating stone 3 so that the water temperature can be regulated from fully cold to fully hot. Ports 9-11 of upper regulating stone 2 are dimensioned, with respect to the ports of lower regulating stone 3, so that the faucet has a closed position and a manual operation position.

Fig. 3 shows the structure of the lower ceramic regulating stone of the mixing valve solution. Lower regulating stone 3 comprises ports 12, 13, and 14 so that when knob 1 is turned, the positions of ports 9-11 of upper regulating stone 2 are turned, at the same time, with respect to ports 12-14 of lower regulating stone 3, so that the water temperature can be regulated from fully cold to fully hot. Ports 12-14 of lower regulating stone 3 are dimensioned with respect to ports 9-11 of lower regulating stone 2 so that the faucet has a closed position and a manual operation position.

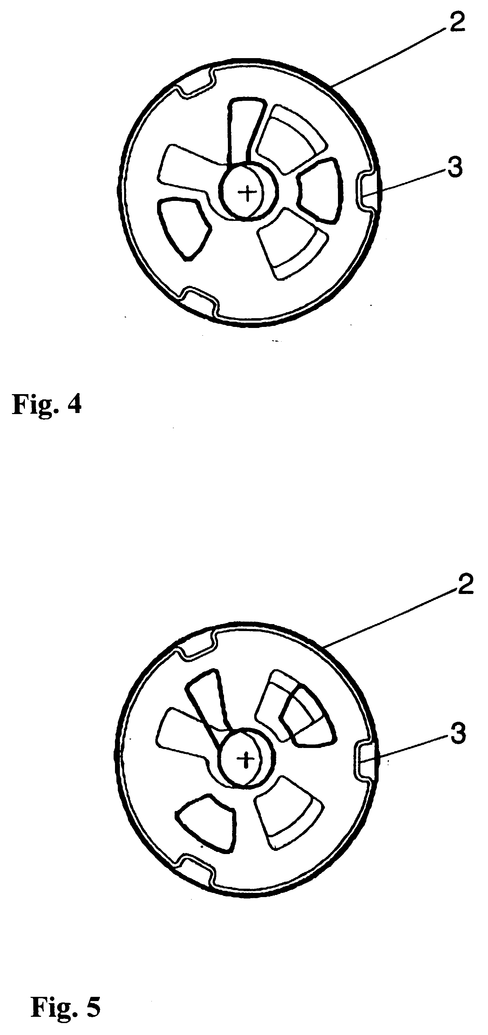

Fig. 4 shows the mutual positions of the upper and lower ceramic regulating stones of the mixing valve solution when the faucet is closed manually. In this case, ports 9-11 of upper regulating stone 2 are placed with respect to ports 12-14 of lower regulating stone 3 so that the inlet passage of water is blocked and the faucet is in its closed position. In the closed position, no water comes from the faucet, not even if the solenoid valve is in its open position.

When the faucet is in its closed position, the faucet does not deliver water when the user is in the response area of the photocell. The closed position is used when the faucet should be closed during cleaning up, for example. In this case, the faucet does not deliver water when cleaning up is carried out in the response area of the photocell.

Fig. 5 shows the mutual positions of the upper and lower ceramic regulating stones of the mixing valve solution when the faucet is in the position of cold water and low flow rate. When knob 1 is turned from the closed position in one direction, for example anticlockwise, the position of cold water and low flow rate is reached. In this case, ports 9-11 of upper regulating stone 2 are placed with respect to ports 12-14 of lower regulating stone 3 so that cold water is allowed to slowly flow into the faucet.

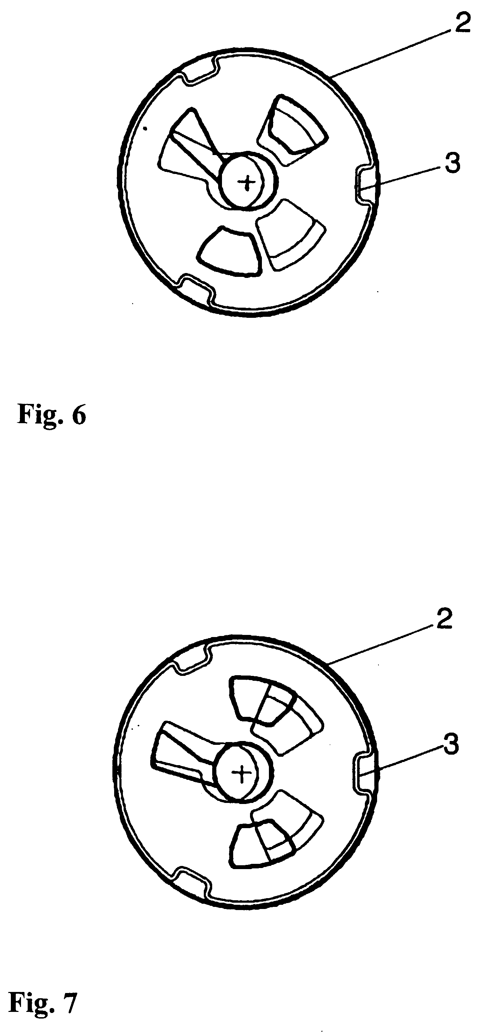

Fig. 6 shows the mutual positions of the upper and lower ceramic regulating stones of the mixing valve solution according to the invention when the faucet is in the position of the normal flow rate of cold water. When knob 1 is turned some more in one direction, for example anticlockwise, from the position in Fig. 5, the position of the normal flow rate of cold water is reached. In this case, ports 9-11 of upper regulating stone 2 are placed with respect to ports 12-14 of lower regulating stone 3 so that cold water is allowed to quickly flow into the faucet.

Fig. 7 shows the mutual positions of the upper and lower ceramic regulating stones of the mixing valve solution when the faucet is in the position of mixed water. When knob 1 is turned some more in one direction, for example anticlockwise, from the position in Fig. 6, the position of mixed water is reached. In this case, ports 9-11 of upper regulating stone 2 are placed with respect to ports 12-14 of lower regulating stone 3 so that mixed water is allowed to quickly flow to the faucet. The flow rate of mixed water cannot be regulated but it is constant and regulated by a limit stop to provide a suitable flow rate.

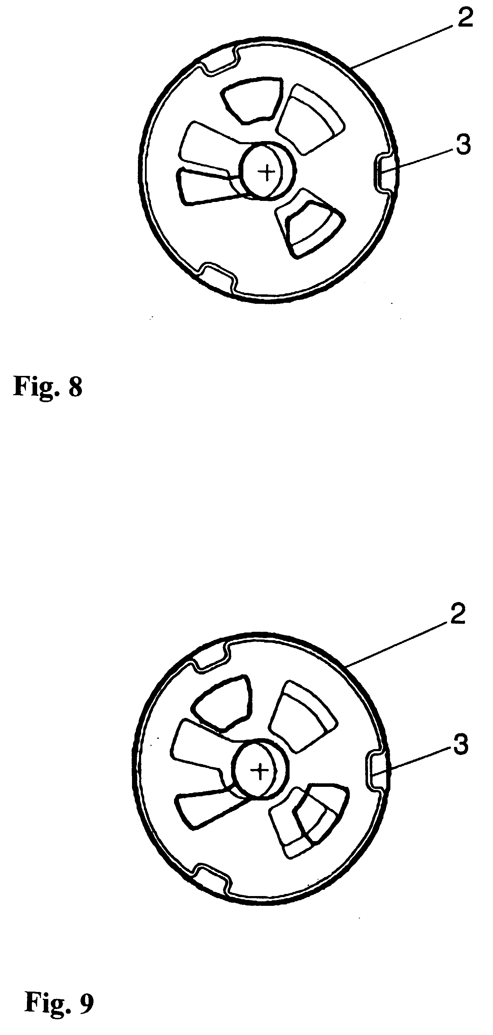

Fig. 8 shows the mutual positions of the upper and lower ceramic regulating stones of the mixing valve solution when the faucet is in the position of the normal flow rate of hot water. When knob 1 is turned some more in one direction, for example anticlockwise, from the position in Fig. 7, the position of the normal flow rate of hot water is reached. In this case, ports 9-11 of upper regulating stone 2 are placed with respect to ports 12-14 of lower regulating stone 3 so that hot water is allowed to quickly flow into the faucet.

Fig. 9 shows the mutual positions of the upper and lower ceramic regulating stones of the mixing valve solution when the faucet is in the position of hot water and low flow rate. When knob 1 is turned some more in one direction, for example anticlockwise, from the position in Fig. 8, the position of hot water and low flow rate is reached. In this case, ports 9-11 of upper regulating stone 2 are placed with respect to ports 12-14 of lower regulating stone 3 so that hot water is allowed to slowly flow into the faucet.

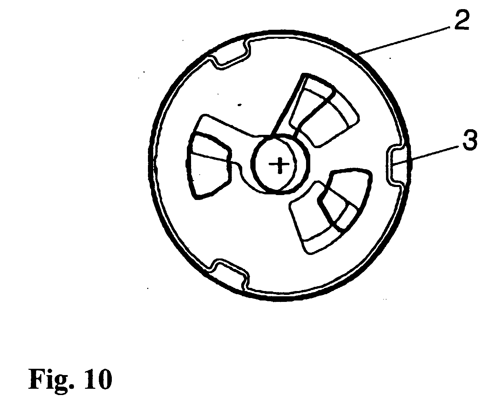

Fig. 10 shows the mutual positions of the upper and lower ceramic regulating stones of the mixing valve solution when the faucet is in the position of manual operation. When knob 1 is turned from the closed position to another direction, for example clockwise, the position of manual operation is reached. In this case, ports 9-11 of upper regulating stone 2 are placed with respect to ports 12-14 of lower regulating stone 3 so that mixed water is allowed to slowly flow into the faucet. Within the range of manual operation, mixed water is obtained from the faucet with a low flow rate even if the solenoid valve is in its closed position.

The manual operation range can be provided behind the limit stop, whereby the manual operation state is reached by lifting knob 1, for example, whereby knob 1 is allowed turn over the limit stop to the manual operation range.

The manual operation range is useful when the solenoid valve is not working because of a power failure, for example. However, because water is needed in this case also, the manual operation range allows one to get mixed water with a low flow rate from the faucet, even if the solenoid valve is in its closed position.

All the above-mentioned operations are carried out by turning the same control knob 1 and by thus changing the positions of the ceramic regulating plates 2, 3.

The valve construction described above which is comprised of control knob 1, the solenoid valve, and ceramic regulating plates 2, 3, can be designed so that it can be placed in old, existing control faucet structures.

The valve solution according to the invention can be applied, for example, to the implementation of photocell-controlled faucets of wash basins.

## Claims

1. A single-control mixing valve with temperature control, comprising a control knob (1), mutually movable ceramic plates (2, 3) comprising mutually co-operating ports (9-11; 12-14) to regulate the flow rate and the volume of hot and cold water, whereby the control knob (1) is adapted to move the one plate (2) to provide the said regulation, and whereby an electrically controlled valve, such as a solenoid valve, is also fitted in the flow route to open and close the flow of water, **characterised** in that the solenoid valve is fitted to be by-passed so that at least a limited flow-through is provided manually.

2. A mixing valve according to Claim 1, **characterised** in that the solenoid valve is by-passed by placing the control knob (1) in a given by-pass position.

3. A mixing valve according to Claim 1 or 2, **characterised** in that in its normal position, i.e., when the solenoid valve is working, the volume of water flow is adapted to be constant by using a limit stop, and the temperature is pre-selected by using the control knob (1).

4. A mixing valve according to any of Claims 1 to 3, **characterised** in that in the by-pass position of the solenoid valve, a limited flow of hot and/or cold water is obtained from the valve.

5. A mixing valve according to any of the preceding Claims, **characterised** in that when the faucet is its closed position, no water comes from the faucet even if the solenoid valve is in its open position, whereby the faucet will not deliver water when the user is in the response area of the photocell.

6. A mixing valve according to any of the preceding Claims, **characterised** in that the faucet comprises a limit stop so that the manual operation range of the faucet is placed behind the limit stop, whereby the manual operation state is reached by lifting the knob (1) so that the knob (1) is allowed to turn over the limit stop into the manual operation range.

7. A mixing valve according to any of the preceding Claims, **characterised** in that the valve construction which is comprised of the control knob (1), the solenoid valve, and ceramic regulating plates (2, 3) is designed so that it can be installed in old, existing control faucet structures.

8. A mixing valve according to any of the preceding Claims, **characterised** in that the valve is placed in a photocell-controlled faucet of a wash basin.
